# EUROPEAN PATENT APPLICATION

(11) **EP 4 632 936 A1**
(43) Date of publication of application: **15.10.2025**
(21) Application number: 23932791.9
(22) Date of filing: 21.11.2023
(51) Int. Cl.: H01M 50/457, H01M 50/451, H01M 50/403

(54) **SEPARATOR FILM AND PREPARATION METHOD THEREFOR, AND BATTERY AND ELECTRIC APPARATUS**

(30) Priority: 11.04.2023 CN 202310383582
(71) Applicant: Contemporary Amperex Technology Co., Limited, Ningde, Fujian 352100 (CN)
(72) Inventor: XIA, Zhonghui, Ningde, Fujian 352100 (CN); WANG, Zhaoguang, Ningde, Fujian 352100 (CN); YANG, Jianrui, Ningde, Fujian 352100 (CN); WANG, Yaohui, Ningde, Fujian 352100 (CN); SUN, Chengdong, Ningde, Fujian 352100 (CN); OUYANG, Chuying, Ningde, Fujian 352100 (CN); HUANG, Siying, Ningde, Fujian 352100 (CN)
(74) Representative: Kraus & Lederer PartGmbB
(86) International application number: PCT/CN2023/133024
(87) International publication number: WO 2024/212520

(57) **Abstract**

The present application relates to the technical field of batteries. Disclosed are a separator film and a preparation method therefor, and a battery and an electric apparatus. The separator film comprises a plurality of layers of microporous films, wherein an intermediate layer is provided between at least two layers of microporous films arranged to be adj acent to each other, and the intermediate layer includes a ferroelectric. In the solution of the present application, the separator film is configured to comprise a plurality of layers of microporous films, and an intermediate layer including a ferroelectric is provided between at least two layers of microporous films arranged to be adjacent to each other. Since the ferroelectric has a spontaneously polarized built-in electric field, which is equivalent to establishing an ion accelerator on an intermediate layer of the separator film, ions are accelerated under the action of the electric field when passing through the intermediate layer of the separator film, thereby improving the ionic conductivity of the separator film.

## Description

The present application claims priority to Chinese Patent Application No. 202310383582.5, filed with China National Intellectual Property Administration on April 11, 2023 and entitled "SEPARATOR FILM AND PREPARATION METHOD THEREFOR, AND BATTERY AND ELECTRIC APPARATUS", the content of which is incorporated herein by reference in its entirety.

### TECHNICAL FIELD

The present application relates to the technical field of batteries, and in particular, to a separator and a preparation method therefor, a battery, and an electric device.

### BACKGROUND

Secondary batteries can achieve a reversible conversion between chemical energy and electric energy, and thus are an ideal carrier for energy utilization and storage. Owing to the advantages such as high energy density, good cycle performance, and environmental friendliness, lithium ion batteries are widely used in various fields, including 3C electronics, electric automobiles, energy storage power stations, and the like. A lithium ion battery generally includes a positive electrode, a negative electrode, a separator, and an electrolytic solution. The separator mainly serves to separate the positive electrode from the negative electrode, so as to prevent the short circuit caused by the contact between the positive electrode and the negative electrode. In addition, the separator allows ions in the electrolytic solution to pass through. Insufficient ionic conductivity of the separator can lead to an increase in the internal resistance of the battery, thereby affecting the electrochemical performance of the battery.

### SUMMARY

An objective of embodiments of the present application is to provide a separator and a preparation method therefor, a battery, and an electric device, aiming at solving the problem of insufficient ionic conductivity of the separator.

### TECHNICAL SOLUTION

The technical solutions used in embodiments of the present application are as follows:
In a first aspect, the embodiments of the present application provide a separator, including a plurality of layers of microporous films, where an intermediate layer is provided between at least two adjacent layers of microporous films, and the intermediate layer includes a ferroelectric.

In some embodiments, the ferroelectric includes an inorganic ferroelectric.

In some embodiments, the inorganic ferroelectric includes an oxide ferroelectric with a perovskite structure.

In some embodiments, the oxide ferroelectric with a perovskite structure includes at least one of barium titanate, lead titanate, bismuth titanate, and sodium bismuth titanate.

In some embodiments, the intermediate layer further includes a binder.

In some embodiments, a content of the binder is 10 wt% to 20 wt% based on a total mass of the intermediate layer.

In some embodiments, the binder includes at least one of polyacrylate, acrylic acid, and carboxymethylcellulose.

In some embodiments, the intermediate layer further includes an inorganic filler.

In some embodiments, the inorganic filler includes at least one of α-alumina, boehmite, silicon dioxide, cerium oxide, magnesium aluminate spiel, zirconia, and titanium dioxide.

In some embodiments, a content of the ferroelectric is 60 wt% to 90 wt% based on the total mass of the intermediate layer.

In some embodiments, the ferroelectric is in the form of particles, and Dv50 of the ferroelectric is 0.5 µm to 1 µm.

In some embodiments, a specific surface area of the ferroelectric is (0.1-10) m²/g.

In some embodiments, the ferroelectric is of a porous structure.

In some embodiments, a thickness of the intermediate layer is 0.5 µm to 2.5 µm.

In some embodiments, Dv50 of materials contained in the intermediate layer is 0.3 µm to 0.8 µm.

In some embodiments, a thickness of the microporous film is 3 µm to 7 µm.

In some embodiments, a porosity of the microporous film is 30% to 70%.

In some embodiments, a pore size of the microporous film is 100 nm to 800 nm.

In some embodiments, a surface density of the microporous film is 2 g/m² to 10 g/m².

In some embodiments, an air permeability of the separator is 300 s/100 cc to 500 s/100 cc.

In some embodiments, a porosity of the separator is 25% to 65%.

In some embodiments, a transverse direction tensile strength of the separator is greater than 1000 kg/cm²; and/or a machine direction tensile strength of the separator is greater than 1200 kg/cm².

In some embodiments, a Curie temperature of the ferroelectric is greater than 100 °C.

In some embodiments, a mass percentage of the intermediate layer is 30 wt% to 50 wt% based on the total mass of the separator.

In a second aspect, the embodiments of the present application provide a preparation method for a separator, including:
providing a first microporous film;
providing an intermediate coating on the first microporous film, where the intermediate coating includes a solvent and a ferroelectric;
providing a second microporous film on the first microporous film, where the intermediate coating is sandwiched between the first microporous film and the second microporous film; and
performing a drying treatment on the intermediate coating to obtain the separator.

In some embodiments, the intermediate coating further includes a binder.

In some embodiments, a solid content of a slurry in the intermediate coating is 10 wt% to 70 wt%.

In some embodiments, a viscosity of the slurry in the intermediate coating is 50 mPa·s to 300 mPa·s.

In some embodiments, after the drying treatment, the method further includes performing a hot-pressing treatment on the separator.

In a third aspect, the embodiments of the present application provide a battery. The battery includes a positive electrode plate, a negative electrode plate, and the separator described above for separating the positive electrode plate from the negative electrode plate or a separator obtained by the above preparation method for a separator.

In a fourth aspect, the embodiments of the present application provide an electric device, including the battery described above.

### BRIEF DESCRIPTION OF THE DRAWINGS

To more clearly illustrate the technical solutions in embodiments of the present application, the drawings required for illustrating the embodiments or exemplary technologies are briefly described below. Apparently, the drawings in the following description illustrate merely some embodiments of the present application, and those of ordinary skill in the art may still derive other drawings from these drawings without creative efforts.
FIG. 1 is a structural schematic view of a vehicle according to some embodiments of the present application;
FIG. 2 is a schematic exploded structure view of a battery according to some embodiments of the present application;
FIG. 3 is a schematic exploded structure view of a battery cell according to some embodiments of the present application;
FIG. 4 is a structural schematic view of an electrode assembly according to some embodiments of the present application;
FIG. 5 is a structural schematic view of a separator according to some embodiments of the present application.

Reference numerals in the detailed description are as follows:
10, electrode plate;
20, electrode assembly; 101, negative electrode plate; 102, positive electrode plate; 201, negative electrode tab; 202, positive electrode tab; 203, separator; 2031, microporous film; 2032, intermediate layer;
30, battery cell; 301, housing; 302, end cover; 303, negative electrode adapting piece; 304, positive electrode adapting piece; 305, insulating member;
40, battery; 401, case; 4011, case body; 4012, case cover;
50, electric device; 501, controller; and 502, motor.

### DETAILED DESCRIPTION

In order to make the objectives, technical solutions and advantages of the present application more apparent, the present application is further described in detail below with reference to the drawings and embodiments. It should be understood that the specific embodiments described herein are merely illustrative of the present application and are not intended to limit the present application.

It should be noted that when a component is referred to as being "fixed to" or "provided on" another component, the component can be directly on the other component or be indirectly on the other component. When a component is referred to as being "connected to" another component, the component can be directly or indirectly connected to the other component. The directions or positional relationships indicated by the terms "upper", "lower", "left", "right", and the like are those shown based on the drawings, These terms are merely intended to facilitate description rather than to indicate or imply that the indicated device or element must have a specific direction and be structured and operated according to the specific direction, and therefore should not be construed as limiting the present application. For those of ordinary skill in the art, the specific meanings of the above terms can be understood according to specific conditions. In addition, the terms "first" and "second" are used for description only and are not to be construed as indicating or implying relative importance or to implicitly indicate the number of technical features. The term "plurality of" means two or more, unless otherwise explicitly and specifically defined.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It should be explicitly and implicitly understood by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more. Similarly, "plurality of groups" refers to two or more groups, and "plurality of pieces" refers to two or more pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential", and the like indicating directional or positional relationships are based on the directional or positional relationships shown in the drawings. These terms are merely for the convenience of describing the embodiments of the present application and simplifying the description, rather than indicating or implying that the noted devices or elements must have specific directions or must be constructed and operated in specific directions, and therefore should not be construed as limiting the embodiments of the present application.

In the description of the embodiments of the present application, unless otherwise clearly specified and defined, the technical terms "mount", "interconnect", "connect", "fix", and the like should be interpreted in their broad senses, and may be, for example, fixed connection, detachable connection, or integrated connection; mechanical connection or electrical connection; or direct connection or indirect connection via an intermediate, or internal communication between two elements or interaction between two elements. For those of ordinary skill in the art, the specific meanings of the above terms in the embodiments disclosed in the present application can be interpreted according to the specific condition.

Secondary batteries can achieve a reversible conversion between chemical energy and electric energy, and thus are an ideal carrier for energy utilization and storage. Owing to the advantages such as high energy density, good cycle performance, and environmental friendliness, lithium ion batteries are widely used in various fields, including 3C electronics, electric automobiles, energy storage power stations, and the like. A lithium ion battery generally includes a positive electrode, a negative electrode, a separator, and an electrolytic solution. The separator mainly serves to separate the positive electrode from the negative electrode, so as to prevent the short circuit caused by the contact between the positive electrode and the negative electrode. In addition, the separator allows ions in the electrolytic solution to pass through. Insufficient ionic conductivity of the separator can lead to an increase in the internal resistance of the battery, thereby affecting the electrochemical performance of the battery.

Currently, the commercial separators mainly include single-layer polyolefin microporous films, such as polyethylene (PE) separator and polypropylene (PP) separator. Generally, the single-layer microporous film has poor mechanical properties. Due to the limitations of the preparation process, the electrode plate in the battery has uneven surfaces. The separator is easily punctured when the separator is sandwiched between the positive electrode plate and the negative electrode plate.

Based on this, the inventor designs a novel separator. The separator includes a plurality of layers of microporous films. By providing the plurality of layers of microporous films, the mechanical strength of the separator can be improved, and the risk of puncturing the separator can be reduced. In addition, an intermediate layer including a ferroelectric is provided between at least two adjacent layers of microporous films. Since the ferroelectric has a built-in electric field formed by spontaneous polarization, which is equivalent to establishing an ion accelerator on the intermediate layer of the separator, ions are accelerated under the action of the electric field when passing through the intermediate layer of the separator, thereby increasing the ionic conductivity of the separator.

The battery disclosed in some embodiments of the present application may, but is not limited to, be used in electric devices such as vehicles, ships, or aircraft. The power system of the electric device may be composed of the battery disclosed in the present application, and the like.

Some embodiments of the present application provide an electric device using a battery as a power source. The electric device may be, but is not limited to, a vehicle, a mobile phone, a portable device, a laptop computer, a ship, a spacecraft, an electric toy, an electric tool, or the like. The vehicle may be, but is not limited to, a petrol or diesel vehicle, a natural gas vehicle, or a new energy vehicle, and the new energy vehicle may be, but is not limited to, a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer.

For ease of description, the present application is illustrated by taking a vehicle 50 as an example of the electric device according to an embodiment of the present application.

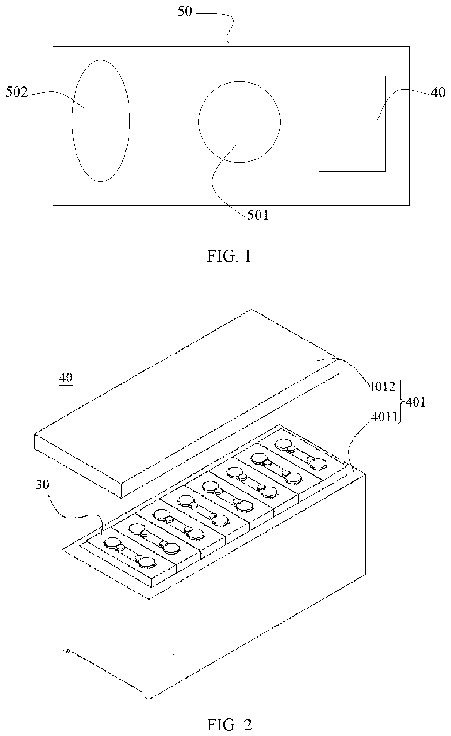

As shown in FIG. 1, FIG. 1 is a structural schematic view of a vehicle 50 according to some embodiments of the present application. A battery 40 is provided inside the vehicle 50, and the battery 40 may be provided at the bottom, head, or tail of the vehicle 50. The battery 40 may be configured to power the vehicle 50. For example, the battery 40 may serve as an operation power source of the vehicle 50. The vehicle 50 may further include a controller 501 and a motor 502. The controller 501 is used for controlling the battery 40 to power the motor 502, e.g., for operation power needed by the vehicle 50 for start-up, navigation, and driving.

In some embodiments of the present application, the battery 40 may not only serve as an operation power source for the vehicle 50, but also as a driving power source for the vehicle 50 to, instead of or in part instead of fuel or natural gas, provide driving power for the vehicle 50.

In some embodiments of the present application, the battery 40 is a secondary battery, which may have various forms, including but not limited to, a battery cell, a battery module group, a battery pack, and the like. The secondary battery herein refers to a battery that can continue to be used by activating the active material through charging after the battery is discharged.

Referring to FIG. 2, FIG. 2 is an exploded view of a battery 40 according to some embodiments of the present application. The battery 40 includes a case 401 and battery cells 30. The battery cells 30 are accommodated in the case 401. The case 401 is a component configured to provide an accommodating space for the battery cells 30, and the case 401 may be of a variety of structures.

In some embodiments, the case 401 may include a case body 4011 and a case cover 4012, and the case body 4011 and the case cover 4012 are mutually lidded with each other and jointly define an accommodating space for accommodating the battery cells 30. Optionally, the case body 4011 may be of a hollow structure with one end open, the case cover 4012 may be of a plate-like structure, and the open side of the case body 4011 is lidded with the case cover 4012.

In the battery 40, a plurality of battery cells 30 may be provided, and the plurality of battery cells 30 may be connected in series, in parallel, or in series-parallel. The series-parallel connection means that both series connection and parallel connection are present for the connection among the plurality of battery cells 30. The plurality of battery cells 30 may be directly connected in series, in parallel, or in series-parallel, and then the whole formed by the plurality of battery cells 30 is accommodated in the case 401. Certainly, the situation may be that in the battery 40, the plurality of battery cells 30 are first connected in series, in parallel, or in series-parallel to form battery modules, and then the plurality of battery modules are connected in series, in parallel, or in series-parallel to form a whole and accommodated in the case 401. The battery 40 may further include other structures, such as a busbar component (not shown) configured to realize electrical connection between the plurality of battery cells 30.

The battery cell 30 may be a secondary battery or a primary battery; it may also be a lithium-sulfur battery, a sodium-ion battery, or a magnesium-ion battery, but is not limited thereto. The battery cell 30 may be cylindrical, flat, rectangular parallelepiped-shaped, or in other shapes.

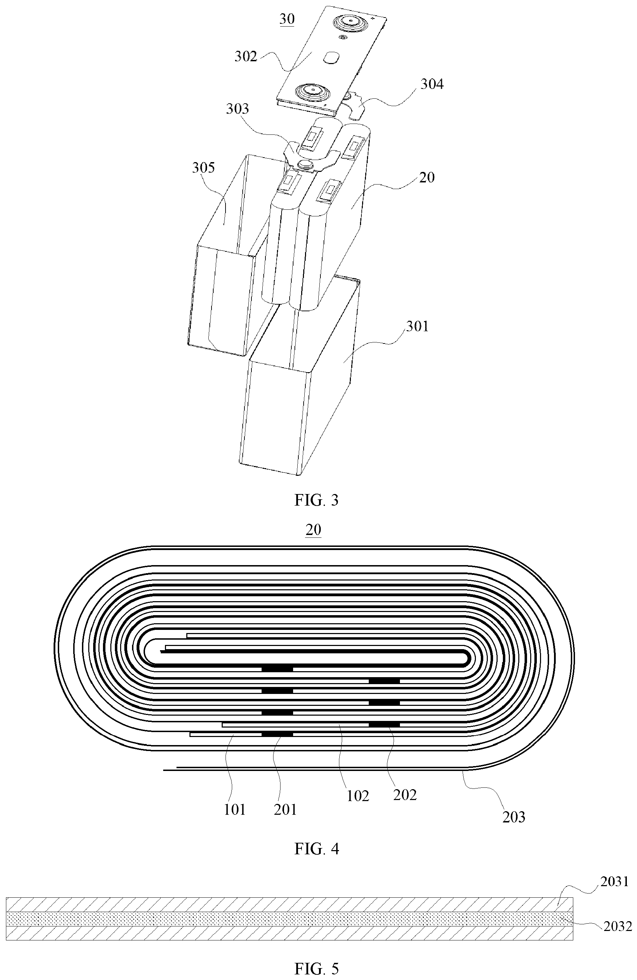

Referring to FIG. 3, FIG. 3 is an exploded view of a battery cell 30 according to some embodiments of the present application. The battery cell 30 refers to a basic unit that enables the mutual conversion between chemical energy and electric energy, and is the smallest unit forming a battery. As shown in FIG. 3, the battery cell 30 includes a housing 301, an end cover 302, an electrode assembly 20, an electrolyte (not shown), and other functional components.

The housing 301 is of a hollow structure with one end open, and the housing 301 is configured to form the internal environment for accommodating the electrode assembly 20, electrolytic solution, and other functional components in combination with the end cover 302. The housing 301 may be in various shapes and sizes, such as a rectangular parallelepiped, a cylinder, and a hexagonal prism. Specifically, the shape of the housing 301 may be determined based on the specific shape and size of the electrode assembly 20. The housing 301 may be made of, but is not limited to, copper, iron, aluminum, stainless steel, aluminum alloy, plastic, or the like, which is not limited herein.

The end cover 302 is a component that is lidded onto the opening of the housing 301 to isolate the internal environment of the battery cell 30 from the external environment. Optionally, the shape of the end cover 302 may be adapted to the shape of the housing 301 to match the housing 301. Optionally, the end cover 302 may be made of a material with a certain hardness and strength (for example, an aluminum alloy), such that the end cover 302 is not easily deformed when being squeezed or collided. This enables the battery cell 30 to have higher structural strength, and the safety performance can also be improved. The end cover 302 may be made of, but is not limited to, copper, iron, aluminum, stainless steel, aluminum alloy, plastic, or the like, which is not limited herein.

In some embodiments, the battery cell 30 further includes functional components such as a negative electrode adapting piece 303 and a positive electrode adapting piece 304. The negative electrode adapting piece 303 is configured to be electrically connected to a negative electrode tab on the electrode assembly 20, and the positive electrode adapting piece 304 is configured to be electrically connected to a positive electrode tab on the electrode assembly 20, so as to output or input electric energy of the battery cell 30. It can be understood that the negative electrode adapting piece 303 is made of a conductive material, and the material of the negative electrode adapting piece 303 may be, but is not limited to, copper, iron, aluminum, or the like. The positive electrode adapting piece 304 is made of a conductive material, and the material of the positive electrode adapting piece 304 may be, but is not limited to, copper, iron, aluminum, or the like.

In some embodiments, the battery cell 30 further includes an insulating member 305. The insulating member 305 is located on the inner side of the housing 301 to separate the housing 301 from the electrode assembly 20, thereby mitigating short-circuit risks. Illustratively, the insulating member 305 may be made of plastic, rubber, or the like.

One or a plurality of electrode assemblies 20 may be accommodated in the housing 301.

Referring to FIG. 4, FIG. 4 is a structural schematic view of an electrode assembly 20 according to some embodiments of the present application. The electrode assembly 20 is a component where the electrochemical reaction occurs in the battery cell 30. The electrode assembly 20 is mainly formed by winding or stacking an electrode plate structure in which the negative electrode plate 101 and the positive electrode plate 102 are integrated, and a separator 203 is usually provided between the negative electrode plate 101 and the positive electrode plate 102 that are adjacent to each other.

The negative electrode plate 101 includes a negative electrode current collector and a negative electrode material layer, and the negative electrode material layer coats the surface of the negative electrode current collector. Taking lithium ion batteries as an example, the material of the negative electrode current collector may be made of copper; the negative electrode material layer includes a negative electrode material, and the negative electrode material may be a silicon-based material or the like.

The positive electrode plate 102 includes a positive electrode current collector and a positive electrode material layer, and the positive electrode material layer coats the surface of the positive electrode current collector. Taking lithium ion batteries as an example, the material of the positive electrode current collector may be aluminum; the positive electrode material layer includes a positive electrode material, and the positive electrode material may be lithium cobaltate, lithium iron phosphate, ternary lithium, lithium manganate, or the like.

The separator 203 is a porous plastic film, which allows lithium ions in the electrolytic solution to pass through freely, but separates the negative electrode plate 101 from the positive electrode plate 102, preventing electrons inside the battery from passing through freely.

The negative electrode current collector and the positive electrode current collector also have portions not coated with the active material layer, and these portions not coated with the active material layer are provided with connection tabs. Specifically, the negative electrode current collector is connected to the negative electrode tab 201, and the positive electrode current collector is connected to the positive electrode tab 202. During charging and discharging of the battery, the positive electrode material layer and the negative electrode material layer react with the electrolytic solution, the tab 201 is connected to the negative electrode adapting piece 303, and the positive electrode tab 202 is connected to the positive electrode adapting piece 304 to form a current circuit. Certainly, in some embodiments, the portions of the negative electrode current collector and the positive electrode current collector that are not coated with the active material layer each constitute a tab.

Referring to FIG. 5, some embodiments of the present application provide a separator 203. The separator 203 includes a plurality of layers of microporous films 2031. An intermediate layer 2032 is provided between at least two adjacent layers of microporous films 2031, and the intermediate layer 2032 includes a ferroelectric.

The separator 203 includes microporous films 2031. The microporous film 2031 refers to a porous film with the pore size ranging from 5.0 nm to 1.0 mm. The microporous film 2031 is made of an organic high molecular polymer. The organic high molecular polymer herein includes, but is not limited to, a composite material composed of one or two or more of polyolefin, polyether, polyether ether ketone, polyimide, polytetrafluoroethylene, polyvinyl fluoride, polyvinylidene fluoride, polyvinylidene chloride, polyethylene-propylene copolymer, C-F bond-containing copolymer, and the like. A plurality of layers of microporous films 2031 are provided. The plurality of layers herein refers to two or more layers. The materials of the microporous films 2031 may be the same or different.

The separator 203 further includes an intermediate layer 2032. The intermediate layer 2032 is provided between two layers of microporous films 2031. The situation may be that the intermediate layer 2032 is provided between every two adjacent layers of microporous films 2031, or the intermediate layer 2032 is provided between some of the two adjacent layers of microporous films 2031, that is, the separator 203 may include one or a plurality of intermediate layers 2032.

The intermediate layer 2032 includes a ferroelectric, which refers to a crystal featuring ferroelectricity. The ferroelectric possesses spontaneous polarization, and the spontaneous polarization direction thereof may be reversed when the direction of an external electric field is reversed. Ferroelectricity can be seen in many types of materials, including a single crystal, a polycrystalline, an inorganic material, an organic material, and the like. Typical ferroelectrics include barium titanate, lead titanate, potassium niobate, and the like.

According to the embodiments of the present application, the separator 203 includes a plurality of layers of microporous films 2031. By stacking the plurality of layers of microporous films 2031, the mechanical properties of the separator 203 can be improved, and the risk of puncturing the separator 203 can be reduced. Further, an intermediate layer 2032 is provided between at least two layers of microporous films 2031, and the intermediate layer 2032 includes a ferroelectric. Since the ferroelectric has a built-in electric field formed by spontaneous polarization, which is equivalent to establishing an ion accelerator on the intermediate layer 2032 of the separator 203, ions are accelerated under the action of the electric field when passing through the intermediate layer 2032 of the separator 203, thereby increasing the ionic conductivity of the separator 203. In addition, in the embodiments of the present application, by sandwiching the intermediate layer 2032 between two layers of microporous films 2031, the microporous films 2031 are used to provide support and protection for the intermediate layer 2032, so as to prevent the displacement and loosening of the intermediate layer 2032, thereby improving the structural stability of the separator 203. Meanwhile, due to the support and protection provided by the microporous films 2031 to the intermediate layer 2032, a relatively thin intermediate coating 2032 can be made, which prevents an excessive thickness of the middle layer 2032 that would otherwise reduce the ionic conductivity of the separator 203.

In some embodiments, the separator 203 includes at least three layers of microporous films 2031. At least two adjacent layers of microporous films 2031 are provided in an attached manner.

The attached manner refers to the situation where no other structure is provided between two adjacent layers of microporous films 2031, and the two are in contact with each other. Optionally, two layers of microporous films 2031 provided in an attached manner are bonded together by hot pressing.

As an example, the separator 203 includes three layers of microporous films 2031 and one intermediate layer 2032. The separator 203 is configured as the following structure: microporous film 2031-microporous film 2031-intermediate layer 2032-microporous film 2031.

As an example, the separator 203 includes four layers of microporous films 2031 and one intermediate layer 2032. The separator 203 may be configured as the following structure: microporous film 2031-microporous film 2031-intermediate layer 2032-microporous film 2031-microporous film 2031; the separator 203 may also be configured as the following structure: microporous film 2031-intermediate layer 2032-microporous film 2031-microporous film 2031-microporous film 2031.

As an example, the separator 203 includes four layers of microporous films 2031 and two layers of intermediate layers 2032. The separator 203 may be configured as the following structure: microporous film 2031-intermediate layer 2032-microporous film 2031-intermediate layer 2032-microporous film 2031-microporous film 2031; the separator 203 may also be configured as the following structure: microporous film 2031-intermediate layer 2032-microporous film 2031-microporous film 2031-intermediate layer 2032-microporous film 2031.

By configuring the separator 203 to include at least three layers of microporous films 2031, with some of the microporous films 2031 in the separator 203 bonded through the intermediate layer 2032, and the other microporous films 2031 provided in an attached manner, the puncture resistance performance of the separator 203 is ensured, and meanwhile, the ion permeability of the separator 203 is improved.

In some embodiments, the separator 203 includes at least three layers of microporous films 2031. The intermediate layer 2032 is provided between every two adjacent microporous films 2031.

As an example, the separator 203 includes three layers of microporous films 2031 and two layers of intermediate layers 2032. The separator 203 is configured as the following structure: microporous film 2031-intermediate layer 2032-microporous film 2031-intermediate layer 2032-microporous film 2031.

As an example, the separator 203 includes four layers of microporous films 2031 and three layers of intermediate layers 2032. The separator 203 is configured as the following structure: microporous film 2031-intermediate layer 2032-microporous film 2031-intermediate layer 2032-microporous film 2031-intermediate layer 2032-microporous film 2031.

By configuring the separator 203 to include at least three layers of microporous films 2031, with every two microporous films 2031 connected through the sandwiched intermediate layer 2032, the overall puncture resistance performance and ionic conductivity of the separator 203 are improved.

In some embodiments, the ferroelectric includes an inorganic ferroelectric.

The inorganic ferroelectric refers to a ferroelectric composed of inorganic materials.

Generally, the inorganic ferroelectric possesses certain hardness and heat resistance. By configuring the ferroelectric to include the inorganic ferroelectric, the mechanical strength and heat resistance of the intermediate layer 2032 can be improved, thereby improving the mechanical strength and heat resistance of the separator 203. Meanwhile, the inorganic ferroelectric possesses superior corrosion resistance, which is beneficial for extending the service life of the separator 203 when the separator 203 is applied in the battery.

In some embodiments, the inorganic ferroelectric includes an oxide ferroelectric with a perovskite structure.

The general formula of the oxide ferroelectric with a perovskite structure is ABO₃, where both A and B are metal ions. The perovskite structure is characterized in that oxygen octahedra centered around B-site metal cations share a vertex and are interconnected, and then are embedded in a tetragonal framework with A-site metal ions occupying the vertex position. The metal cations on the A and B sites may represent a single type or multiple types of ions. If the sites are occupied by a single type of ions, the perovskite structure is referred to as a simple perovskite; if the sites are occupied by multiple types of ions, the perovskite structure is referred to as a complex perovskite. Generally, due to differences in the type and radius of the ions occupying the A and B sites, the characteristics and properties of the perovskite oxides also vary.

The oxide ferroelectric with a perovskite structure features intrinsic, non-volatile, and reversible spontaneous polarization, polar surfaces with high charge density, and the like, which is beneficial for increasing the ionic conductivity of the separator 203.

In some embodiments, the oxide ferroelectric with a perovskite structure includes at least one of barium titanate, lead titanate, bismuth titanate, and sodium bismuth titanate.

As an example, the ferroelectric includes barium titanate (BaTiO₃). The Curie temperature of the barium titanate is 120 °C. The barium titanate has a relatively stable perovskite structure, without torsion of the oxygen octahedra within the crystal. When the temperature drops to 130 °C, the barium titanate undergoes a paraelectric-ferroelectric phase transition. Within the temperature range of 130 °C to 5 °C, the barium titanate belongs to a tetragonal system with a 4 mm point group and exhibits significant ferroelectricity, and the spontaneous polarization thereof is along the c-axis direction, namely the [001] direction. The barium titanate exhibits a relatively small structural change when it is transformed from a cubic crystal system to a tetragonal crystal system. When the temperature drops to 5 °C or below, the barium titanate crystal is transformed into an orthorhombic system with a mm2 point group within the temperature range of 5 to 90 °C. In this case, the crystal retains ferroelectricity, and the spontaneous polarization intensity thereof is along the face diagonal [011] direction of the original cubic unit cell. When the temperature continues to drop to -90 °C or below, the crystal is transformed from the orthorhombic system to a trigonal system with a 3 m point group. In this case, the crystal retains ferroelectricity, and the spontaneous polarization strength thereof is parallel to the direction of the body diagonal [111] of the original cubic unit cell. The barium titanate also exhibits a small structural change when it is transformed from an orthorhombic crystal system to a trigonal crystal system.

As an example, the ferroelectric includes lead titanate (PbTiO₃), which is a ferroelectric material having a high Curie temperature and a low dielectric constant. Lead titanate is in the tetragonal ferroelectric phase at 490 °C or below and in the cubic paraelectric phase at 490 °C or above.

As an example, the ferroelectric includes bismuth titanate (Bi₄Ti₃O₁₂). The bismuth titanate, as a bismuth-containing compound with an oxygen octahedral layered structure, is optically a biaxial crystal, and shows strong spontaneous polarization in the ferroelectric phase.

As an example, the ferroelectric includes sodium bismuth titanate (BNT), which is an A-site complex ion perovskite-type ferroelectric. At room temperature, the sodium bismuth titanate belongs to the trigonal system with a Curie temperature of 320 °C, and has the advantages of strong ferroelectricity, small piezoelectric constant, and small dielectric constant.

The ferroelectric described above exhibits ferroelectricity over a wide temperature range, which covers most of the operating temperature of batteries, thereby helping to ensure the battery performance.

**In** some embodiments, the intermediate layer 2032 includes a binder.

The binder refers to a medium material which enables the materials to be tightly connected into a whole. The binder includes, but is not limited to, at least one of polyacrylate, acrylic acid, carboxymethylcellulose, polyallyl alcohol, polyurethane, polystyrene, vinyl acetate resin, acrylic resin, and chlorinated rubber.

By adding the binder to the intermediate layer 2032, it is beneficial for the binder to bond the ferroelectric with the microporous films 2031 on both sides, so as to stabilize the position of the ferroelectric and prevent the ferroelectric from displacement, thereby ensuring stable performance of the separator 203. Meanwhile, the inclusion of the binder can also enhance the connection strength between the intermediate layer 2032 and the microporous film 2031, thereby improving the puncture resistance performance of the separator 203.

In some embodiments, the content of the binder is 10 wt% to 20 wt% based on the total mass of the intermediate layer 2032.

As an example, the content of the binder may be 10 wt%, 11 wt%, 12 wt%, 13 wt%, 14 wt%, 15 wt%, 16 wt%, 17 wt%, 18 wt%, 19 wt%, or 20 wt%.

The content of the binder may affect the mechanical properties and the ionic conductivity of the intermediate layer 2032. An increase in the content of the binder will improve the mechanical properties of the intermediate layer 2032 but reduce the ionic conductivity of the intermediate layer 2032. By setting the content of the binder to be 10 wt% to 20 wt%, the balance between the puncture resistance and the ionic conductivity of the separator 203 can be achieved within this range, allowing the separator 203 to possess both strong puncture resistance ability and superior ionic conductivity.

In some embodiments, the intermediate layer 2032 further includes an inorganic filler.

The inorganic filler refers to solid particles composed of inorganic materials, which are used to fill in between the ferroelectrics.

Generally, the inorganic filler possesses certain hardness and heat resistance. By configuring the intermediate layer 2032 to include the inorganic filler, the mechanical strength and heat resistance of the separator 203 can be improved. In addition, the inorganic filler may be mixed with the ferroelectric to adjust the distribution of the ferroelectric in the intermediate layer 2032, thereby improving the performance uniformity of the separator 203. Meanwhile, the ionic conductivity of the separator 203 is adjusted by regulating the ratio of the inorganic filler to the ferroelectric.

In some embodiments, the inorganic filler includes at least one of α-alumina (Al₂O₃), boehmite (γ-AlOOH), silicon dioxide (SiO₂), cerium oxide (CeO₂), magnesium aluminate spinel (MgAl₂O₄), zirconia (ZrO), and titanium dioxide (TiO₂).

The inorganic filler described above features good mechanical strength and heat resistance, which is beneficial for improving the mechanical strength and thermal stability of the separator 203.

In some embodiments, the content of the ferroelectric is 60 wt% to 95 wt% based on the total mass of the intermediate layer 2032.

As an example, the content of the ferroelectric is 60 wt%, 65 wt%, 70 wt%, 75 wt%, 80 wt%, 85 wt%, 90 wt%, or 95 wt%.

The content of the ferroelectric affects the ionic conductivity of the separator 203. A higher content of the ferroelectric may result in higher ionic conductivity of the separator 203. By setting the content of the ferroelectric in the intermediate layer 2032 within the range described above, superior ionic conductivity of the separator 203 may be achieved.

In some embodiments, the ferroelectric is in the form of particles, and Dv50 of the ferroelectric is 0.5 µm to 1 µm.

The average particle size is typically denoted as Dv50, which means that 50% of the powder particles are larger than this particle size and 50% of the powder particles are smaller than this particle size. As an example, the average particle size Dv50 of the ferroelectric may be 0.5 µm, 0.6 µm, 0.7 µm, 0.8 µm, 0.9 µm, or 1 µm.

Generally, a larger particle size of the ferroelectric results in better air permeability of the intermediate layer 2032 and increased ionic conductivity of the separator 203. However, a larger particle size of the ferroelectric may increase the risk of puncturing the microporous film 2031 by the ferroelectric. Meanwhile, the particle size of the ferroelectric also affects the thickness of the intermediate layer 2032. By setting the average particle diameter Dv50 of the ferroelectric to be 0.5 µm to 1 µm, the ionic conductivity and the structural stability of the separator 203 may be guaranteed.

In some embodiments, the specific surface area of the ferroelectric is (0.1-10) m²/g.

The specific surface area refers to the total area of the material per unit mass, expressed in m²/g. As an example, the specific surface area of the solid particle is 0.1 m²/g, 1 m²/g, 2 m²/g, 3 m²/g, 4 m²/g, 5 m²/g, 6 m²/g, 7 m²/g, 8 m²/g, 9 m²/g, or 10 m²/g.

Generally, the specific surface area of the ferroelectric affects the infiltration effect of the intermediate layer 2032 in the electrolytic solution. A larger specific surface area of the ferroelectric brings a better infiltration effect of the intermediate layer 2032. By setting the specific surface area of the ferroelectric to be (0.1-10) m²/g, the infiltration rate of the separator 203 in the electrolytic solution is increased, thereby further increasing the ionic conductivity.

In some embodiments, the ferroelectric is of a porous structure.

The porous structure of the ferroelectric refers to the distribution of a large number of hollow-through pore passages in the ferroelectric.

As an example, during the preparation of the ferroelectric, a pore-forming agent may be added to form hollow-through pore passages in the prepared ferroelectric.

By configuring the ferroelectric to be of the porous structure, the pore passages distributed in the ferroelectric are used as ion transfer channels. Meanwhile, in combination with the built-in electric field formed by the spontaneous polarization of the ferroelectric, both factors work together to accelerate the passage of ions through the separator 203, thereby increasing the ionic conductivity of the separator 203.

In some embodiments, the thickness of the intermediate layer 2032 is 0.5 µm to 2.5 µm.

As an example, the thickness of the intermediate layer 2032 may be 0.5 µm, 0.6 µm, 0.7 µm, 0.8 µm, 0.9 µm, 1.0 µm, 1.1 µm, 1.2 µm, 1.3 µm, 1.4 µm, 1.5 µm, 1.6 µm, 1.7 µm, 1.8 µm, 1.9 µm, 2 µm, 2.1 µm, 2.2 µm, 2.3 µm, 2.4 µm, or 2.5 µm.

The thickness of the intermediate layer 2032 affects the puncture resistance ability and ionic conductivity of the separator 203. An increased thickness improves the puncture resistance but reduces the ionic conductivity. In combination with the structure of the separator 203 according to the embodiments of the present application, the intermediate layer 2032 is provided between the microporous films 2031, and the thickness of the intermediate layer 2032 is set to 0.5 µm to 2.5 µm. Within this range, the balance between the puncture resistance and the ionic conductivity of the separator 203 can be achieved, allowing the separator 203 to possess both strong puncture resistance ability and superior ionic conductivity.

In some embodiments, Dv50 of the material contained in the intermediate layer 2032 is 0.3 µm to 0.8 µm.

The average particle size is typically denoted as Dv50, which means that 50% of the powder particles are larger than this particle size and 50% of the powder particles are smaller than this particle size. As an example, the average particle diameter Dv50 of the materials contained in the intermediate layer 2032 may be 0.3 µm, 0.4 µm, 0.5 µm, 0.6 µm, 0.7 µm, or 0.8 µm.

A larger particle size of the materials in the intermediate layer 2032 results in better air permeability of the intermediate layer 2032 and increased ionic conductivity of the separator 203. However, the larger particle size of the materials may increase the risk of puncturing the microporous film 2031 by the ferroelectric. By setting the average particle diameter Dv50 of the materials contained in the intermediate layer 2032 to be 0.3 µm to 0.8 µm, the ionic conductivity and structural stability of the separator 203 may be guaranteed.

In some embodiments, the thickness of the microporous film 2031 is 3 µm to 7 µm.

As an example, the thickness of the microporous film 2031 may be 3 µm, 3.5 µm, 4 µm, 4.5 µm, 5 µm, 5.5 µm, 6 µm, 6.5 µm, or 7 µm.

The thickness of the microporous film 2031 can affect the puncture resistance ability and ionic conductivity of the microporous film 2031. A thinner microporous film 2031 results in lower internal resistance and higher ionic conductivity, but lower mechanical strength and worse puncture strength. In combination with the structure of the separator 203 according to the embodiments of the present application, by providing a plurality of layers of microporous films 2031 and controlling the thickness of each of the layers of microporous films 2031 to be 3 µm to 7 µm, the balance between the puncture resistance and the ionic conductivity of the separator 203 can be achieved, allowing the separator 203 to possess both strong puncture resistance ability and superior ionic conductivity.

In some embodiments, the porosity of the microporous film 2031 is 30% to 70%.

As an example, the porosity of the microporous film 2031 is 30%, 35%, 40%, 45%, 50%, 55%, 60%, 65%, or 70%.

The porosity of the microporous film 2031 can affect the tensile strength and ionic conductivity of the microporous film 2031. A higher porosity of the microporous film 2031 results in lower internal resistance, and higher ionic conductivity but lower tensile strength. In combination with the structure of the separator 203 according to the embodiments of the present application, by controlling the porosity of the microporous film 2031 to be 30%-70%, the balance between the tensile strength and the ionic conductivity of the separator 203 can be achieved, allowing the separator 203 to possess both strong tensile strength and superior ionic conductivity.

In some embodiments, the average pore size of the microporous film 2031 is 100 nm to 800 nm.

Generally, the microporous film 2031 is provided with a large number of micropores, and the average pore size of the micropores is 100 nm to 800 nm. As an example, the average pore size of the micropores may be 100 nm, 150 nm, 200 nm, 250 nm, 300 nm, 350 nm, 400 nm, 450 nm, 500 nm, 550 nm, 600 nm, 650 nm, 700 nm, 750 nm, or 800 nm.

The average pore size of the microporous film 2031 can affect the tensile strength and ionic conductivity of the microporous film 2031. A higher average pore size of the microporous film 2031 results in lower internal resistance, and higher ionic conductivity but lower tensile strength. In combination with the structure of the separator 203 according to the embodiments of the present application, by providing a plurality of layers of microporous films 2031 and controlling the average pore size of each of the microporous films 2031 to be 100 nm to 800 nm, the balance between the tensile strength and the ionic conductivity of the separator 203 can be achieved, allowing the separator 203 to possess both strong tensile strength and superior ionic conductivity.

In some embodiments, the surface density of the microporous film 2031 is 2 g/m² to 10 g/m².

Surface density refers to the mass per unit area of a substance with a specified thickness, expressed in g/m². As an example, the surface density of the microporous film 2031 is 2 g/m², 3 g/m², 4 g/m², 5 g/m², 6 g/m², 7 g/m², 8 g/m², 9 g/m², or 10 g/m².

Due to the large number of micropores on the microporous film 2031, the surface density of the microporous film 2031 decreases as the number of the micropores increases. By setting the surface density of the microporous film 2031 to be 2 g/m² to 10 g/m², both the porosity and air permeability of the microporous film 2031 are moderate, which facilitates the balance between the tensile strength and ionic conductivity of the separator 203.

In some embodiments, the air permeability of the separator 203 is 300 s/100 cc to 500 s/100 cc.

The air permeability of the separator 203 refers to the degree to which gas is allowed to pass through the separator 203. The testing method for the air permeability of the separator 203 is as follows: The separator 203 is fixed, air pressure is applied to one side of the separator 203, and the air pressure drop and the time taken are measured to determine the air permeability of the separator 203. In the case of fixing the separator 203, a certain air pressure is applied to one side of the separator 203. Due to the micropores present on the separator 203, the air pressure gradually decreases until it is equal to the atmospheric pressure. The air permeability of the separator 203 can be known by comparing the time taken for the pressure to decrease from the initial pressure to the final pressure. The air permeability performances of different separators 203 can be compared by comparing the pressure drop times thereof. A shorter pressure drop time indicates better air permeability.

As an example, the air permeability of the separator 203 is 300 s/100 cc, 350 s/100 cc, 400 s/100 cc, 450 s/100 cc, or 500 s/100 cc.

By setting the air permeability of the separator 203 to be 300 s/100 cc to 500 s/100 cc, the battery exhibits superior electrochemical performance when the separator 203 is applied in the battery.

In some embodiments, the porosity of the separator 203 is 25% to 65%.

As an example, the porosity of the separator 203 is 25%, 30%, 35%, 40%, 45%, 50%, 55%, 60%, or 65%.

By setting the porosity of the separator 203 to be 25% to 65%, the battery exhibits superior electrochemical performance when the separator 203 is applied in the battery.

In some embodiments, the transverse direction tensile strength of the separator 203 is greater than 1000 kg/cm².

The tensile strength refers to the maximum tensile force that the material can withstand after tensile deformation. Specifically, the tensile strength includes machine direction (MD) tensile strength and transverse direction (TD) tensile strength. The machine direction refers to the mechanical stretching direction and the transverse direction is perpendicular to the mechanical stretching direction.

As an example, the transverse direction tensile strength of the separator 203 may be, but is not limited to, 1000 kg/cm², 1050 kg/cm², 1100 kg/cm², 1200 kg/cm², 1300 kg/cm², or 1400 kg/cm².

The separator 203 described above has good mechanical properties.

In some embodiments, the machine direction tensile strength of the separator 203 is greater than 1200 kg/cm².

As an example, the machine direction tensile strength of the separator 203 may be, but is not limited to, 1200 kg/cm², 1250 kg/cm², 1300 kg/cm², 1400 kg/cm², 1500 kg/cm², or 1600 kg/cm².

The separator 203 described above has good mechanical properties.

In some embodiments, the Curie temperature of the ferroelectric is greater than 100 °C.

The Curie temperature of the ferroelectric refers to the temperature at which the ferroelectric undergoes a phase transition, causing the ferroelectric phase to disappear when the temperature rises to the Curie temperature.

As an example, the ferroelectric includes BaTiO₃, and the Curie temperature of BaTiO₃ is 120 °C.

As an example, the ferroelectric includes PbTiO₃, and the Curie temperature of PbTiO₃ is 490 °C.

The ferroelectric loses ferroelectricity when the temperature exceeds the Curie temperature. By setting the Curie temperature of the ferroelectric to be greater than 100 °C, the ferroelectric retains ferroelectricity at the service temperature less than 100 °C, such that the ionic conductivity of the separator 203 can be increased, which allows the separator to meet the service temperature requirements of most batteries, thereby expanding the application range of the separator 203.

In some embodiments, the mass percentage of the intermediate layer 2032 is 30 wt% to 50 wt% based on the total mass of the separator 203.

As an example, the mass percentage of the intermediate layer 2032 is 30 wt%, 35 wt%, 40 wt%, 45 wt%, or 50 wt%.

Within the range described above, the mass proportion of the intermediate layer 2032 ranges from one third to one half. Generally, as the content of the intermediate layer 2032 in the separator 203 increases, the proportion of the microporous film 2031 decreases, leading to an increase in the ionic conductivity of the separator 203, but a decrease in mechanical properties. By setting the mass percentage of the intermediate layer 2032 to be 30 wt% to 50 wt%, the balance between the mechanical strength and the ionic conductivity of the separator 203 can be achieved, allowing the separator 203 to possess both superior ionic conductivity and good mechanical properties.

Some embodiments of the present application further provide a preparation method for a separator. The preparation method includes:
providing a first microporous film;
providing an intermediate coating on the first microporous film, where the intermediate coating includes a solvent and a ferroelectric;
providing a second microporous film on the first microporous film, where the intermediate coating is sandwiched between the first microporous film and the second microporous film; and
performing a drying treatment on the intermediate coating to obtain the separator.

The first microporous film and the second microporous film both refer to the porous film with a pore size ranging from 5.0 nm to 1.0 mm. The material for preparing the first microporous film and the second microporous film includes, but is not limited to, a composite material composed of one or more of polyolefin, polyether, polyether ether ketone, polyimide, polytetrafluoroethylene, polyvinyl fluoride, polyvinylidene fluoride, polyvinylidene chloride, polyethylene-propylene copolymer, C-F bond-containing copolymer, and the like. In addition, the material of the first microporous film and the material of the second microporous film may be the same or different.

The intermediate coating is provided on the first microporous film; optionally, the intermediate coating is provided on a surface of the first microporous film on a side. The intermediate coating includes the solvent and the ferroelectric. The ferroelectric is dispersed in the solvent, i.e., forming a slurry, where the solvent includes, but is not limited to, water. The ferroelectric refers to a crystal featuring ferroelectricity. The ferroelectric includes, but is not limited to, at least one of an inorganic ferroelectric and an organic ferroelectric. The inorganic ferroelectric includes, but is not limited to, an oxide ferroelectric with a perovskite structure. The oxide ferroelectric with a perovskite structure includes, but is not limited to, at least one of BaTiO₃, PbTiO₃, Bi₄Ti₃O₁₂, and SrTiO₃.

The second microporous film is provided on the first microporous film. Specifically, the second microporous film is covered on the side of the intermediate coating facing away from the first microporous film, such that the intermediate coating is sandwiched between the first microporous film and the second microporous film.

The intermediate coating undergoes a drying treatment to evaporate the solvent in the intermediate coating. The situation may be that the intermediate coating undergoes a drying treatment before the second microporous film is provided on the first microporous film, or the intermediate coating undergoes a drying treatment after the second microporous film is provided on the first microporous film. The drying treatment includes the step of placing the sample in an oven for heat treatment at a temperature of 30 °C to 90 °C.

The preparation method for the separator provided by the embodiments of the present application is simple and easy to operate. The prepared separator includes a first microporous film, a second microporous film, and an intermediate coating sandwiched between the first microporous film and the second microporous film. The intermediate coating includes a ferroelectric. Since the ferroelectric has a built-in electric field formed by spontaneous polarization, which is equivalent to establishing an ion accelerator on the intermediate coating of the separator, ions are accelerated under the action of the electric field when passing through the intermediate coating of the separator, thereby increasing the ionic conductivity of the separator. In addition, in the embodiments of the present application, by sandwiching the intermediate coating between the first microporous film and the second microporous film, the first microporous film and the second microporous film are used to provide support and protection for the intermediate coating, so as to prevent the displacement and loosening of the intermediate coating, thereby improving the structural stability of the separator. Meanwhile, due to the support and protection provided by the first microporous film and the second microporous film to the intermediate coating, a relatively thin intermediate coating can be made, which prevents an excessive coating thickness that would otherwise reduce the ionic conductivity of the separator.

In some embodiments, the intermediate coating further includes a binder.

The binder refers to a medium material which enables the materials to be tightly connected into a whole. The binder includes, but is not limited to, at least one of polyacrylate, acrylic acid, carboxymethylcellulose, polyallyl alcohol, polyurethane, polystyrene, vinyl acetate resin, acrylic resin, and chlorinated rubber.

By adding the binder to the intermediate coating, it is beneficial for the binder to bond the ferroelectric to the first microporous film and the second microporous film on both sides, so as to stabilize the position of the ferroelectric and prevent the ferroelectric from displacement, thereby ensuring stable performance of the separator. Meanwhile, the inclusion of the binder can also enhance the connection strength between the intermediate coating and the first microporous film and the second microporous film, thereby improving the puncture resistance performance of the separator.

In some embodiments, the solid content of the slurry in the intermediate coating is 10 wt% to 70 wt%.

The slurry refers to a solid-liquid mixture. The slurry typically includes a solvent and a solid substance dispersed in the solvent. The solid substance includes, but is not limited to, a ferroelectric. Optionally, the solid substance further includes an inorganic filler. Optionally, the inorganic filler includes, but is not limited to, at least one of α-alumina (Al₂O₃), boehmite (γ-AlOOH), silicon dioxide (SiO₂), cerium oxide (CeO₂), magnesium aluminate spinel (MgAl₂O₄), zirconia (ZrO), and titanium dioxide (TiO₂).

The solid content refers to the mass percentage of the residual part after the slurry is dried relative to the total amount. As an example, the solid content of the slurry in the intermediate coating is 10 wt%, 20 wt%, 30 wt%, 40 wt%, 50 wt%, 60 wt%, or 70 wt%.

By setting the solid content of the slurry in the intermediate coating to be 10 wt% to 70 wt%, the preparation of an intermediate coating with a uniform and relatively thin thickness is facilitated.

In some embodiments, the viscosity of the slurry in the intermediate coating is 50 mPa·s to 300 mPa·s.

Optionally, the viscosity of the slurry in the intermediate coating is 50 mPa·s, 100 mPa·s, 150 mPa·s, 200 mPa·s, 250 mPa·s, or 300 mPa·s.

By setting the viscosity of the slurry in the intermediate coating to be 50 mPa·s to 300 mPa·s, it is beneficial for improving the film-forming effect of the intermediate coating.

In some embodiments, after the drying treatment, the method further includes performing a hot-pressing treatment on the separator.

The hot-pressing treatment on the separator refers to the process of performing heating and pressurizing treatment on the separator, so as to enhance the connection between the components of the separator.

By performing the hot-pressing treatment on the separator, it is beneficial for improving the overall mechanical properties of the separator.

Some embodiments of the present application further provide a battery 40. The battery includes a positive electrode plate 102, a negative electrode plate 101, and a separator 203 for separating the positive electrode plate 102 from the negative electrode plate 101. The separator 203 is the separator described above or a separator obtained by the preparation method for the separator described above.

According to the embodiments of the present application, the battery 40 includes a positive electrode plate 102, a negative electrode plate 101, and a separator 203 for separating the positive electrode plate 102 from the negative electrode plate 101. A ferroelectric is provided in the separator 203. During both the charging and discharging processes, an external electric field is formed between the negative electrode plate 101 and the positive electrode plate 102 of the battery 40, and the spontaneous polarization direction of the ferroelectric may change with the direction of the external electric field and tend to be consistent with the change of the direction of the external electric field. Thus, during both the charging and discharging processes, this is equivalent to establishing an ion accelerator in the separator 203. Ions are accelerated under the action of the built-in electric field formed by spontaneous polarization of the ferroelectric when passing through the separator 203, thereby increasing the ionic conductivity of the separator 203. As a result, the internal resistance of the battery 40 is reduced, and the performance of the battery 40 is improved.

Some embodiments of the present application further provide an electric device 50. The electric device 50 includes the battery 40 described above.

The present application will be described below in conjunction with specific embodiments.

### Example 1:

S1. Preparation of ferroelectric material BaTiO₃: In a typical synthesis process, the gel collection method was adopted to prepare the BaTiO₃ nano material with an ultrafine and controllable particle size, and the porous cross-linked structure formed by the sol-gel method improved the specific surface area and porosity of BaTiO₃.

To mix together barium isopropoxide and titanium isopropoxide in a molar ratio of Ba:Ti = 1: 1 (stoichiometric ratio), barium isopropoxide was first dissolved in 40 mL of ethanol while stirring at 1000 r/min. Then, the same molar equivalent of titanium isopropoxide was added while stirring. After stirring, a 10 mL mixture of ethanol and water (with a water content of 10%-20%) was carefully added while stirring until the solution became clear. After the ethanol/water mixture was added, a great increase in the viscosity of the solution occurred rapidly. The solution was sealed in a closed container and left at room temperature overnight. Then, the solution was heated at 60 °C for 12 h. This process yielded a solid gel monolith completely separated from the supernatant. The gel was washed thoroughly and then dried to obtain the fine nanometer BaTiO₃ powder.

S2. Preparation of double-layer ferroelectric functional separation film by using the prepared BaTiO₃ powder:

The PE microporous film having a thickness of 5 µm and PP microporous film having a thickness of 6 µm were used as the substrate layers. The prepared BaTiO₃ powder was uniformly mixed with polymethyl acrylate and sodium carboxymethylcellulose in a mass ratio of 85:10:5, and water was added during the mixing process to form an aqueous slurry with a solid content of 20 wt%. The slurry was applied to one surface of the PE microporous film by extrusion, forming a wet coating with a thickness of approximately 2.5 µm. The wet coating was transferred to an oven and dried at 60 °C for 2 minutes, then the PE microporous film was reversed through the roller, and the PP microporous film was laminated on the wet coating, such that a double-layer composite ferroelectric separation film was obtained.

### Example 2:

### S1. Preparation of ferroelectric material PbTiO₃:

In a typical synthesis process, PbTiO₃ was prepared by the hydrothermal method. Specifically, 2 g of TiO₂ and 10 g of PbNO₃ were sequentially added into a 6 M KOH aqueous solution and stirred for 0.5 h. The mixture was then placed into a Teflon-lined reaction kettle and reacted for 12 h at a constant temperature of 180 °C. After natural cooling, the mixture was neutralized to a pH value of 6-8 with a 1 M HNO₃ solution, washed with deionized water, and dried in a 60 °C oven for 12 h, such that a PbTiO₃ powder was obtained.

### S2. Preparation of double-layer ferroelectric functional separation film by using the prepared PbTiO₃ powder:

The PE microporous film having a thickness of 5 µm and PP microporous film having a thickness of 6 µm were used as the substrate layers. The prepared PbTiO₃ powder was uniformly mixed with polymethyl acrylate and sodium carboxymethylcellulose in a mass ratio of 85:10:5, and water was added during the mixing process to form an aqueous slurry with a solid content of 20 wt%. The slurry was applied to one surface of the PE microporous film by extrusion, forming a wet coating with a thickness of approximately 2 µm. The wet coating was transferred to an oven and dried at 60 °C for 2 minutes, then the PE microporous film was reversed through the roller, and the PP microporous film was laminated on the wet coating, such that a double-layer composite ferroelectric separation film was obtained.

### Example 3:

### S1. Preparation of ferroelectric material Bi₄Ti₃O₁₂:

In a typical synthesis procedure, a Bi₄Ti₃O₁₂ powder material was synthesized by the solid phase method. Specifically, Bi₂O₃ and TiO₂ were mixed in a stoichiometric ratio of 2:3, followed by adding 50 mmol NaCl and KCl. The milled powder was calcined at 800 °C for 2 h. After cooling, the white powder was washed with deionized water, filtered, and dried at 60 °C for 12 h, such that a Bi₄Ti₃O₁₂ powder was obtained.

### S2. Preparation of double-layer ferroelectric functional separation film by using the prepared Bi₄Ti₃O₁₂ powder:

The PE microporous film having a thickness of 5 µm and PP microporous film having a thickness of 6 µm were used as the substrate layers. The prepared Bi₄Ti₃O₁₂ powder was uniformly mixed with polymethyl acrylate and sodium carboxymethylcellulose in a mass ratio of 85:10:5, and water was added during the mixing process to form an aqueous slurry with a solid content of 20 wt%. The slurry was applied to one surface of the PE microporous film by extrusion, forming a wet coating with a thickness of approximately 2.3 µm. The wet coating was transferred to an oven and dried at 60 °C for 2 minutes, then the PE microporous film was reversed through the roller, and the PP microporous film was laminated on the wet coating, such that a double-layer composite ferroelectric separation film was obtained.

### Example 4:

The lead titanate prepared in Example 2 was used, with the difference that the thickness of the wet coating in S2 was approximately 0.5 µm.

### Example 5:

The lead titanate prepared in Example 2 was used, with the difference that the thickness of the wet coating in S2 was approximately 2.5 µm.

### Comparative Example 1:

The PE microporous film having a thickness of 5 µm and PP microporous film having a thickness of 6 µm were used as the substrate layers. First, a PCS polymer coating was sprayed on the surface of the 5 µm PE microporous film on a side, with a spraying amount of 0.5 mg/m². The PCS coating can ensure the bonding of the double-layer separation film, and a small spraying amount does not affect the ionic conductivity. Then, the PP base film on the other side was laminated under a pressure of 500 N at 80 °C for 10 s, such that a double-layer separation film without a ferroelectric functional layer was obtained.

### Comparative Example 2:

The PE microporous film having a thickness of 5 µm and the ferroelectric prepared in Example 1 were used to prepare a slurry. The slurry was blade-coated onto one side of the PE microporous film with a blade coating thickness of 5 µm. The coated film was then dried at 80 °C for 10 min, such that a single-layer separation film with a ferroelectric functional layer was obtained.

### Comparative Example 3:

The process was the same as that of Comparative Example 2, with the difference that the blade coating thickness was 2.5 µm.

### Comparative Example 4:

On the basis of Comparative Example 1, the ferroelectric prepared in Example 1 was used to prepare a slurry. The slurry was blade-coated onto one side of the PE microporous film away from the PP microporous film, with a blade coating thickness of 2.5 µm. The coated film was then dried at 80 °C for 10 min, such that a double-layer separation film with a ferroelectric functional layer was obtained.

### Preparation of battery:

A lithium iron phosphate (LFP) material with a design specific capacity of 168 Ah/g was used for the positive electrode. The active material in the electrode plate accounted for 90%, the binder polyvinylidene difluoride (PVDF) accounted for 5%, and the conductive agent carbon black accounted for 5%. The coating weight of the electrode plate was 0.175 mg/1540 mm², and the compaction density was 1.65 g/cm³. The electrode plate was prepared through processes including stirring, coating, cold pressing, and the like.

Artificial graphite was used for the negative electrode. The active main material accounted for 80 wt%, the binder styrene-butadiene rubber (SBR) and the dispersant sodium carboxymethylcellulose (CMC) accounted for 10 wt%, and the conductive agent accounted for 10 wt%. The electrode plate was prepared through processes including stirring, coating, cold pressing, and the like. The final coating weight of the electrode plate was 0.265 mg/1540 mm², and the compaction density of the electrode plate was 3.45 g/cm³.

The electrolytic solution was an ethylene carbonate (EC) solution containing 1 M LiPF₆.

Finally, the separators provided in Examples 1 to 5 as well as Comparative Examples 1 and 2 were separately assembled with the above electrode plates and electrolytic solution into a stacked battery cell, and then the stacked battery cell was encapsulated by an aluminum-plastic film, such that a battery was obtained.

To verify the inventive step of the examples in the present application, the separator samples and batteries prepared in Examples 1 to 5 as well as Comparative Examples 1 and 4 were characterized by the following characterization methods:
1.1 Measurement of film thickness: The film thickness at 5 points within a 100 mm × 100 mm area of the separator was measured using a contact thickness gauge, and the average film thickness was calculated.
1.2 Measurement of air permeability: The air permeability (Gurley value) was measured according to JIS P 8117:2009, using air as the gas for measurement.
1.3 Measurement of thermal shrinkage: The separator was cut to obtain a 100 × 50 mm sample. The sample was placed in an oven at 105 °C for 1 h, and then the degree of shrinkage of the separator was measured.
1.4 Measurement of puncture strength: The puncture strength was measured using a needle having a diameter of 1 mm (with a 0.5 mmR tip). The maximum load value was recorded at the time of puncturing the separator at a speed of 2 mm/s.
1.5 Measurement of specific surface area of the ferroelectric: The nitrogen adsorption isotherm was measured at 196 °C on ASAP2020 (Micromeritics). The specific surface area (SBET) was calculated from the isotherm using the Brunauer-Emmet-Teller method.
1.6 Measurement of ionic conductivity: Alternating-current impedance spectroscopy tests were performed on the separators with different numbers of layers under constant voltage using a Bio-logic electrochemical workstation. The intercept of the intersection of the impedance curve and the real part on the Nyquist plot was taken as Rs, which was compared with the Rs parameter of a known standard electrical conductivity sample, such that the ionic conductivity was obtained.
1.7 Measurement of low-temperature capacity retention rate:

Normal-temperature capacity test: At 25 °C, the lithium ion battery was first charged to a voltage of 3.65 V at a constant current of 1.0 C, and then discharged to a voltage of 2.25 V at a constant current of 1.0 C. The reversible capacity of the first cycle was recorded.

Low-temperature capacity test: At 25 °C, the lithium ion battery was first charged to a voltage of 3.65 V at a constant current of 1.0 C, and then discharged to a voltage of 2.25 V at a constant current of 1.0 C. The battery was stored at 0 °C for 2 h. The charging/discharging operation was repeated in the same manner, and the reversible capacity of the first cycle was recorded.

Low-temperature capacity retention rate = (discharging capacity during the first low-temperature cycle/discharging capacity during the first normal-temperature cycle) × 100%.

**Table 1**

| | Ferroelectric | Thickness of separator | Ionic conductivity |
|---|---|---|---|
| Example 1 | Barium titanate | 13.4µm | 0.9*10⁻³S/m |
| Example 2 | Lead titanate | 12.8µm | 1.4*10⁻³S/m |
| Example 3 | Bismuth titanate | 13.2µm | 1.2*10⁻³S/m |
| Example 4 | Lead titanate | 11.5µm | 1.1*10⁻³S/m |
| Example 5 | Lead titanate | 13.5µm | 1.6*10⁻³S/m |
| Comparative Example 1 | None | 10.9µm | 0.8*10⁻³S/m |
| Comparative Example 2 | Barium titanate | 10.2µm | 0.6*10⁻³S/m |
| Comparative Example 3 | Barium titanate | * | * |
| Comparative Example 4 | Barium titanate | * | * |

The asterisk (*) in the table denotes untested performance parameters.

**Table 2**

| | Ferroelectric | Specific surface area | Air permeability | Thermal shrinkage | Puncture strength | Low-temperature capacity retention rate |
|---|---|---|---|---|---|---|
| Example 1 | Barium titanate | 0.96m²/g | 325s/100cc | 2.2% | 610gf | 82% |
| Example 2 | Lead titanate | 1.58m²/g | 367s/100cc | 2.3% | 728gf | 91% |
| Example 3 | Bismuth titanate | 1.04m²/g | 319s/100cc | 2.5% | 637gf | 88% |
| Example 4 | Lead titanate | 1.58m²/g | 301s/100cc | 3.5% | 580gf | 86% |
| Example 5 | Lead titanate | 1.58m²/g | 485s/100cc | 1.5% | 754gf | 92% |
| Comparative Example 1 | None | None | 289s/100cc | 3.5% | 421gf | 80% |
| Comparative Example 2 | Barium titanate | 0.96m²/g | 389s/100cc | 4.5% | 384gf | 76% |
| Comparative Example 3 | Barium titanate | 0.96m²/g | * | * | * | * |
| Comparative Example 4 | Barium titanate | 0.96m²/g | * | * | * | * |

The asterisk (*) in the table denotes untested performance parameters.

The characterization results are shown in Tables 1 and 2. As can be seen from Tables 1 and 2, in Examples 1 to 5, an intermediate layer is provided between two layers of microporous films, and the intermediate layer includes a ferroelectric. In Comparative Example 1, two layers of microporous films are directly bonded together, and no intermediate layer including a ferroelectric is provided between the two layers of microporous films. Compared with the separator prepared in Comparative Example 1, the separators prepared in Examples 1 to 5 show an increase of at least 10% in ionic conductivity even when the thickness of the separator is increased, showing a remarkable effect. This is because the ferroelectric is provided on the separator, and the ferroelectric has a built-in electric field formed by spontaneous polarization, which is equivalent to establishing an ion accelerator on the separator. Ions are accelerated under the action of the electric field when passing through the intermediate layer of the separator, thereby increasing the ionic conductivity of the separator. Meanwhile, the puncture strength of the separator is improved, and the thermal shrinkage is reduced. This is because the provision of the intermediate layer increases the thickness of the separator, and meanwhile, the intermediate layer includes an inorganic ferroelectric, which inherently possesses good hardness and heat resistance, such that the mechanical strength and heat resistance of the intermediate layer can be improved, thereby improving the mechanical strength and the heat resistance of the separator. In addition, the air permeability of the separator is increased. This is because the ferroelectric in the intermediate layer is in the form of particles with a certain particle size, and gaps are formed between the ferroelectric particles. The gaps may serve as air channels for air to flow through, thereby improving the overall air permeability of the separator.

In Comparative Example 2, a coating including the ferroelectric is directly provided on a surface of a single-layer microporous film on a side. Compared with the separator prepared in Comparative Example 2, the separators prepared in Examples 1 to 5 have increased ionic conductivity, improved puncture strength, and reduced thermal shrinkage. However, the air permeability is reduced. Specifically, although the ferroelectric is provided in the separators in Examples 1 to 5 and Comparative Example 2, the thickness of the coating in Comparative Example 2 is 5 µm, while the thicknesses of the intermediate layers in Examples 1 to 5 are 2.4 µm, 1.8 µm, 2.2 µm, 0.5 µm, and 2.5 µm, respectively. The thickness of the coating in Comparative Example 2 is at least twice the thickness of the intermediate layers in Examples 1 to 5. An increase in the coating thickness will increase the difficulty for ions to pass through the separator, leading to a decrease in the ionic conductivity of the separator. The reason why the thickness of the coating in Comparative Example 2 is relatively large is that the microporous film in Comparative Example 2 is only a single layer, and to improve the mechanical properties of the separator, the thickness of the coating needs to be increased. In addition, the coating is provided on one side of the single-layer microporous film, such that the coating, as the outer side of the separator, can be in contact with electrolytic solution or even electrodes. Therefore, the thickness of the coating is generally required to be relatively large to prevent the coating from displacement or even peeling off. In Examples 1 to 5, the intermediate layer is sandwiched between two layers of microporous films, and the microporous films are used to provide support and positional restraint for the intermediate layer, such that the risk of displacement and peeling off of the intermediate layer can be reduced. Based on this, the thickness of the intermediate layer can be appropriately reduced. Meanwhile, the intermediate layer further includes a binder, such that both sides of the intermediate layer are respectively bonded with the microporous films. This increases the connection strength between the intermediate layer and the microporous film, thereby improving the overall mechanical properties of the separator.

In addition, in Comparative Example 3, the blade coating thickness is reduced on the basis of Comparative Example 2, and in Comparative Example 4, a coating is provided on the side of the PE microporous film away from the PP microporous film on the basis of Comparative Example 1. In both Comparative Examples 3 and 4, the coatings serve as the outermost layer of the separator and have similar thicknesses of approximately 2.5 µm, which is half of the thickness of the coating in Comparative Example 2. However, since the coating is too thin and the coating is provided on the outer surface of the separator, the coating is unstable and prone to peeling off, resulting in the inability to perform performance testing.

Compared with the batteries including the separators provided in Comparative Examples 1 and 2, the batteries including the separators provided in Examples 1 to 5 have a higher low-temperature capacity retention rate. This is because the intermediate layer including the ferroelectric is provided between two layers of microporous films in the separators provided in Examples 1 to 5, which not only increases the ionic conductivity of the separator, but also improves the mechanical properties, ultimately increasing the low-temperature capacity retention rate of the batteries.

Based on the above results, it can be concluded that the ferroelectric functional film in the examples, compared with the results shown in the comparative examples, improves the mechanical properties of the separation film while meeting high ion permeability. The ferroelectric coating of a single-layer separation film requires a thicker coating to ensure the mechanical strength.

Finally, it should be noted that the above embodiments are only used to illustrate the technical solutions of the present application, rather than limit same. Although the present application has been described in detail with reference to the foregoing embodiments, those of ordinary skill in the art should understand that modifications can still be made to the technical solutions recorded in the foregoing embodiments, or equivalent substitutions to some or all of the technical features. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A separator, comprising a plurality of layers of microporous films, wherein an intermediate layer is provided between at least two adjacent layers of microporous films, and the intermediate layer includes a ferroelectric.

2. The separator according to claim 1, wherein the ferroelectric comprises an inorganic ferroelectric.

3. The separator according to claim 2, wherein the inorganic ferroelectric comprises an oxide ferroelectric with a perovskite structure.

4. The separator according to claim 3, wherein the oxide ferroelectric with a perovskite structure comprises at least one of barium titanate, lead titanate, bismuth titanate, and sodium bismuth titanate.

5. The separator according to any one of claims 1 to 4, wherein the intermediate layer further comprises a binder; optionally, a content of the binder is 10 wt% to 20 wt% based on a total mass of the intermediate layer.

6. The separator according to claim 5, wherein the binder comprises at least one of polyacrylate, acrylic acid, and carboxymethylcellulose.

7. The separator according to any one of claims 1 to 6, wherein the intermediate layer further comprises an inorganic filler.

8. The separator according to claim 7, wherein the inorganic filler comprises at least one of α-alumina, boehmite, silicon dioxide, cerium oxide, magnesium aluminate spinel, zirconia, and titanium dioxide.

9. The separator according to any one of claims 1 to 8, wherein a content of the ferroelectric is 60 wt% to 95 wt% based on the total mass of the intermediate layer.

10. The separator according to any one of claims 1 to 9, wherein the ferroelectric is in a form of particles, and Dv50 of the ferroelectric is 0.5 µm to 1 µm; and/or a specific surface area of the ferroelectric is (0.1-10) m²/g; and/or the ferroelectric is of a porous structure.

11. The separator according to any one of claims 1 to 10, wherein a thickness of the intermediate layer is 0.5 µm to 2.5 µm.

12. The separator according to any one of claims 1 to 11, wherein Dv50 of materials contained in the intermediate layer is 0.3 µm to 0.8 µm.

13. The separator according to any one of claims 1 to 12, wherein a thickness of the microporous film is 3 µm to 7 µm; and/or a porosity of the microporous film is 30% to 70%; and/or a pore size of the microporous film is 100 nm to 800 nm; and/or a surface density of the microporous film is 2 g/m² to 10 g/m².

14. The separator according to any one of claims 1 to 13, wherein an air permeability of the separator is 300 s/100 cc to 500 s/100 cc; and/or a porosity of the separator is 25% to 65%; and/or a transverse direction tensile strength of the separator is greater than 1000 kg/cm²; and/or a machine direction tensile strength of the separator is greater than 1200 kg/cm².

15. The separator according to any one of claims 1 to 14, wherein a Curie temperature of the ferroelectric is greater than 100 °C.

16. The separator according to any one of claims 1 to 15, wherein a mass percentage of the intermediate layer is 30 wt% to 50 wt% based on the total mass of the separator.

17. A preparation method for a separator, comprising:
providing a first microporous film;
providing an intermediate coating on the first microporous film, wherein the intermediate coating comprises a solvent and a ferroelectric;
providing a second microporous film on the first microporous film, wherein the intermediate coating is sandwiched between the first microporous film and the second microporous film; and
performing a drying treatment on the intermediate coating to obtain the separator.

18. The preparation method for a separator according to claim 17, wherein the intermediate coating further comprises a binder; and/or a solid content of a slurry in the intermediate coating is 10 wt% to 70 wt%; and/or a viscosity of the slurry in the intermediate coating is 50 mPa·s to 300 mPa s; and/or after the drying treatment, the preparation method further comprises performing a hot-pressing treatment on the separator.

19. A battery, comprising a positive electrode plate, a negative electrode plate, and the separator according to any one of claims 1 to 16 or a separator obtained by the preparation method for a separator according to any one of claims 17 to 18 for separating the positive electrode plate from the negative electrode plate.

20. An electric device, comprising the battery according to claim 19.
